# NEUE EUROPÄISCHE PATENTSCHRIFT

(11) **EP 1 768 228 B2**
(45) Veröffentlichungstag und Bekanntmachung des Hinweises auf die Entscheidung über den Einspruch: **25.09.2013**
(45) Hinweis auf die Patenterteilung: 09.06.2010
(21) Anmeldenummer: 06118633.4
(22) Anmeldetag: 09.08.2006
(51) Int. Cl.: H02K 1/18, H02K 1/28

(54) **Elektrische Maschine mit verbesserter Befestigung eines Rückschlusselements**
Electrical machine with improved fastening of magnetic return element
Machine électrique avec fixation ameliorée d'un élément de reflux

(30) Priorität: 23.09.2005 DE 102005045396
(43) Veröffentlichungstag der Anmeldung: 28.03.2007
(73) Patentinhaber: ROBERT BOSCH GMBH, 70442 Stuttgart (DE)
(72) Erfinder: Oberle, Hans-Juergen, 76437, Rastatt (DE); Bernauer, Christof, 76596, Hundsbach (DE); Scheer, Dieter, 77830, Buehlertal (DE); Merkelbach, Uwe, 76189, Karlsruhe (DE)

(56) Entgegenhaltungen:
- EP-A1- 0 848 474
- WO-A-2005/109602
- WO-A-2005/122367
- DE-A1- 10 358 456
- DE-A1-102004 018 524
- DE-C1- 1 205 345
- DE-C1- 3 904 516
- GB-A- 2 029 120
- 'Handbuch der Fertigungstechnik', Bd. BAND 5, CARL HANSER VERLAG, MÜNCHEN WIEN, ISBN 3-446-12536-1 vol. GÜNTER SPUR U. THEODOR STÖFERLE -1996: 'Fügen, Handhaben und Montieren', Seiten 64 - 68
- 'Meyers Lexikon der Technik und der exakten Naturwissenschaften', Bd. BAND 3, BIBLIOGRAPHISCHES INSTITUT, MANNHEIM/WIEN/ZÜRICH vol. 'Herausgegeben von den Fachredaktionen des Bibliographischen Instituts'

## Beschreibung

### Stand der Technik

Die vorliegende Erfindung betrifft eine elektrische Maschine, insbesondere einen Elektromotor, welche eine verbesserte Befestigung eines Rückschlusselements an einem Polgehäuse aufweist.

Elektrische Maschinen sind aus dem Stand der Technik in vielfältigen Ausgestaltungen bekannt. Bei Elektromotoren werden zur besseren Leitung eines magnetischen Flusses Rückschlussringe verwendet. Hierbei ist es bekannt, dass diese Rückschlussringe entweder ein Polgehäuse des Elektromotors umschließen oder sie sind im Inneren des Polgehäuses angeordnet. Die Rückschlussringe weisen üblicherweise eine ringzylindrische Form auf. Bei einer Ausgestaltung mit äußerem Polgehäuse und innerem Rückschlussring wird für die Montage zuerst ein oder mehrere Magneten im Inneren des Ringes befestigt und anschließend wird der Rückschlussring in das Polgehäuse eingeschoben. Hierbei wird üblicherweise zwischen dem Rückschlussring und dem Polgehäuse eine Presspassung gewählt. Aufgrund der Presspassung und aufgrund der Möglichkeit der Addition von herstellungsbedingten Toleranzen der Bauteile kann es jedoch dazu kommen, dass durch die Montage des Rückschlussringes am Polgehäuse unerwünschte Kräfte auftreten. Im Extremfall kann eine Montage des Rückschlussrings im Polgehäuse nicht mehr durchgeführt werden. Weiterhin üben die Fügekräfte zwischen Polgehäuse und Rückschlussring auch Spannungen auf den bzw. die Magneten aus, was zu Beschädigungen der Magneten führen kann. Wenn alternativ zur Presspassung zwischen dem Polgehäuse und dem Rückschlussring eine Spielpassung gewählt wird, ist zwar ein kraftfreies Fügen der Teile möglich, jedoch entsteht ein Luftspalt zwischen den Teilen, welcher die Flussleitung hemmt. Ferner ist eine zusätzliche Vorrichtung zum Halten des Rückschlussrings und des Polgehäuses notwendig.

Mit der GB-A-2029120 wird eine elektrische Maschine mit einem Polgehäuse, Magneten und einem Rückschlusselement bekannt geworden, bei dem zwischen dem Polgehäuse und dem Rückschlusselement eine Verbindung mit einer Spielpassung realisiert ist. Die DE 3904516 C1 zeigt eine permanent erregte elektrische Maschine mit einem Polgehäuse, in dem permanent magnetische Polringe angeordnet sind, die mittels eines Jochrings miteinander gekoppelt sind. Dabei werden die magnetischen Polringe in radialer Richtung gegen den Jochring gepresst.

Die DE 102004018524 A1 offenbart ein Aussenstator-Rückschlusselement, welches zumindest teilweise aus einem Pulververbundwerkstoff besteht. Das Rückschlusselement wird dabei axial in eine Halterung des Polgehäuses eingespannt.

### Vorteile der Erfindung

Die erfindungsgemäße elektrische Maschine mit den Merkmalen des Patentanspruchs 1 weist demgegenüber den Vorteil auf, dass eine Befestigung eines Rückschlusselements an einem Polgehäuse einfach und kostengünstig durchgeführt werden kann. Die erfindungsgemäße Befestigungsmöglichkeit ist dabei unempfindlich gegenüber herstellungsbedingten Toleranzen der einzelnen Bauteile und ermöglicht eine ausreichende Flussleitung. Erfindungsgemäß wird weiter eine Beschädigung von Magneten vermieden. Dies wird erfindungsgemäß dadurch erreicht, dass eine Verbindung zwischen einem Polgehäuse und einem Rückschlusselement der elektrischen Maschine einen ersten Verbindungsbereich und einen zweiten Verbindungsbereich umfasst, wobei der erste Verbindungsbereich mit einer Presspassung und der zweite Verbindungsbereich mit einer Spielpassung gebildet ist. Somit ist erfindungsgemäß nicht mehr die gesamte Verbindung zwischen dem Polgehäuse und dem Rückschlusselement durch eine Presspassung bereitgestellt, sondern nur noch bereichsweise eine Presspassung vorgesehen, wobei der Presspassungsbereich derart gewählt ist, dass nur ein minimaler Einfluss der Fügekräfte auf die Magneten, vorhanden ist. Erfindungsgemäß kann jedoch trotzdem eine genaue Positionierung und eine gute Fixierung der beiden Bauteile ermöglicht werden.

Die Unteransprüche zeigen bevorzugte Weiterbildungen der Erfindung.

Die Verbindung umfasst eine Verzahnung, wobei die Verzahnung wenigstens einen Zahn mit einer linken und einer rechten Zahnflanke, einem Zahnkopf und einem Zahnfuß umfasst. Der die Presspassung aufweisende erste Verbindungsbereich ist dabei an der linken und rechten Zahnflanke ausgebildet. Entsprechend ist der zweite Verbindungsbereich, welcher die Spielpassung aufweist, zumindest am Zahnkopf und am Zahnfuß gebildet. Diese Verbindung ist besonders einfach und kostengünstig herstellbar und kann insbesondere bei zylindrischen Polgehäusen und zylindrischen Rückschlusselementen einfach realisiert werden.

Weiter bevorzugt ist im montierten Zustand am Zahnkopf und/oder am Zahnfuß der Verzahnung jeweils ein definierter Luftspalt vorhanden. Vorzugsweise sind hierbei Maßvorgaben für die Toleranzen des Zahnfußes und/oder des Zahnkopfes derart vorgesehen, dass auch bei maximaler Toleranzabweichung der definierte Luftspalt vorhanden ist.

Besonders bevorzugt ist die Verzahnung entlang des gesamten Umfangs zwischen dem Rückschlusselement und dem Polgehäuse ausgebildet.

Gemäß einer anderen bevorzugten Ausgestaltung der Erfindung ist die Verzahnung nur partiell entlang des Umfangs zwischen dem Rückschlusselement und dem Hohlgehäuse ausgebildet. Vorzugsweise ist die Verzahnung dabei symmetrisch am Umfang verteilt angeordnet.

Um einen Einfluss der Fügekräfte auf die gefügten Bauteile möglichst minimal zu halten, ist ein Winkel der linken und rechten Zahnflanke in einem Bereich zwischen 50° und 90° gewählt. Dadurch sind die Zahnflanken relativ steil ausgebildet, so dass die durch das Fügen entstehenden Kräfte und Spannungen insbesondere in Radialrichtung möglichst gering sind. Somit können radiale Spannungen auf den Magneten minimiert werden.

Gemäß der Erfindung ist das Rückschlusselement innerhalb des Polgehäuses angeordnet.

Um auch Spannungen und Kräfte in Umfangsrichtung aufnehmen zu können, ist das Rückschlusselement vorzugsweise mit einem Schlitz gebildet. Der Schlitz ist dabei vorzugsweise in axialer Richtung des Rückschlusselements parallel zu einer Mittelachse des Rückschlusselements gebildet. Weiter bevorzugt ist der Schlitz derart gebildet, dass er in Längsrichtung nicht vollständig durch das Rückschlusselement hindurchgeht, sondern dass er nur eine gewisse Tiefe aufweist.

Um eine möglichst einfache und schnelle Montage zu ermöglichen, ist das Rückschlusselement und der Magnet als eine Vorbaugruppe vorgesehen. Dadurch muss lediglich die Vorbaugruppe noch mit dem Polgehäuse gefügt werden.

Die elektrische Maschine ist vorzugsweise ein Elektromotor, welcher in Fahrzeugen insbesondere bei Komfortanwendungen im Fahrzeug, z.B. Sitzverstellung, Fensterheber, Schiebedach usw. verwendet wird.

### Zeichnung

Nachfolgend werden unter Bezugnahme auf die begleitende Zeichnung Ausführungsbeispiele der Erfindung im Detail beschrieben. In der Zeichnung ist:
- Figur 1: eine perspektivische Ansicht eines Polgehäuses während der Montage eines Rückschlusselements gemäß einem ersten Ausführungsbeispiel der Erfindung,
- Figur 2: eine perspektivische Ansicht des Polgehäuses,
- Figur 3: eine perspektivische Ansicht des Rückschlusselements mit Magneten,
- Figur 4: eine Draufsicht eines Polgehäuses mit montiertem Rückschlusselement,
- Figur 5: eine vergrößerte Darstellung der Verbindung zwischen Polgehäuse und Rückschlusselement,
- Figur 6: eine perspektivische Ansicht eines Rückschlusselements gemäß einem zweiten Ausführungsbeispiel der Erfindung, und
- Figur 7: eine perspektivische Ansicht eines Rückschlusselements gemäß einem dritten Ausführungsbeispiel der Erfindung.

### Beschreibung der Ausführungsbeispiele

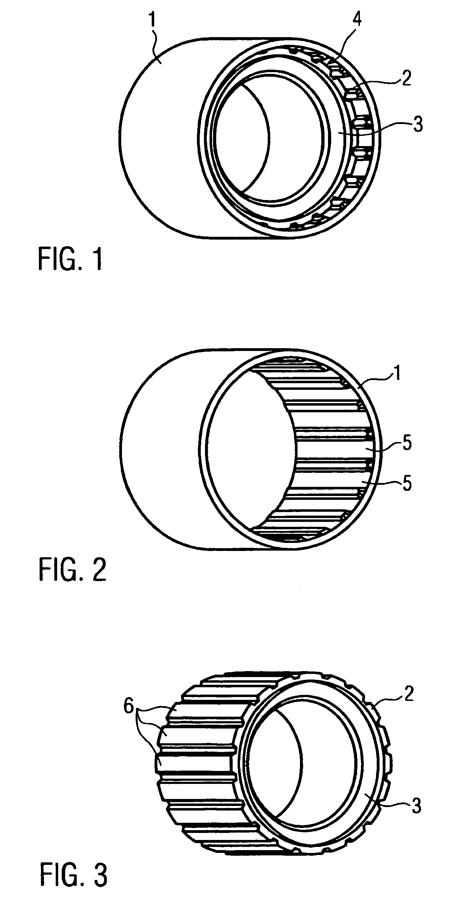

Nachfolgend wird unter Bezugnahme auf die Figuren 1 bis 5 eine elektrische Maschine gemäß einem ersten Ausführungsbeispiel der Erfindung beschrieben.

In den Figuren ist die elektrische Maschine nicht vollständig dargestellt, sondern lediglich die für die Erfindung relevanten Hauptbauteile der elektrischen Maschine. Die elektrische Maschine kann beispielsweise ein Elektromotor sein, welcher als ein Komfortantrieb in Fahrzeugen verwendet wird. Wie in Figur 1 gezeigt, umfasst die elektrische Maschine ein Polgehäuse 1, welches im Wesentlichen als zylindrischer Ring ausgebildet ist. Das Polgehäuse 1 ist im Detail in Figur 2 gezeigt. Wie aus Figur 2 ersichtlich ist, ist am inneren Umfang des Polgehäuses 1 eine Vielzahl von Zähnen 5 gebildet. Die Zähne 5 verlaufen in Axialrichtung des Polgehäuses 1 und sind gleichmäßig entlang des inneren Umfangs des Polgehäuses angeordnet. Die Zähne verlaufen dabei über die gesamte Länge des Polgehäuses 1. Zur Verzahnungslänge/Länge des Rückschlussrings sei folgendes angemerkt: Der Rückschlussring sollte mindestens so lang sein wie der Magnet, die Verzahnung befindet sich idealerweise entlang der Gesamtlänge des Rückschlussrings, d.h., die Verzahnung im Polgehäuse muss nicht zwingend über dessen Gesamtlänge ausgebildet sein, sondern passt sich idealerweise der Länge des Rückschlussrings bzw. dessen Verzahnungslänge an. Die am Innenumfang des Polgehäuses 1 angeordneten Zähne 5 sind Teil einer Verbindung 4 zwischen dem Polgehäuse 1 und einem als Rückschlussring ausgebildeten Rückschlusselement 2. Das Rückschlusselement 2 ist im Detail aus Figur 3 ersichtlich. Wie in Figur 3 gezeigt, ist am Außenumfang des Rückschlusselements 2 eine Verzahnung mit einer Vielzahl von Zähnen 6 gebildet. Die nach außen gerichteten Zähne 6 des Rückschlusselements 2 sind entlang des Außenumfangs in gleichmäßiger Weise gebildet. Die Zähne 6 verlaufen dabei ebenfalls über die gesamte axiale Länge des Rückschlusselements 2. Es sei angemerkt, dass die axiale Länge des Rückschlusselements 2 gleich der axialen Länge des Polgehäuses 1 ist. Die Zähne 5 des Polgehäuses 1 und die Zähne 6 des Rückschlusselements 2 sind dabei symmetrisch zu einer Ebene durch eine Zahnmitte ausgebildet.

Am inneren Umfang des Rückschlusselements 2 ist schematisch ein Ringmagnet 3 eingezeichnet. Der Ringmagnet 3 ist beispielsweise mittels Kleben mit dem Rückschlusselement 2 verbunden.

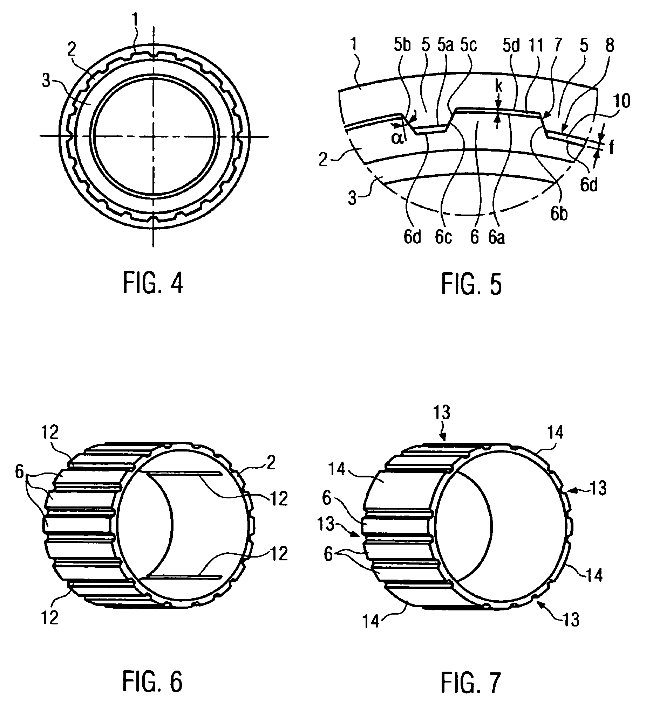

Figur 4 zeigt den montierten Zustand des Rückschlusselements 2 mitsamt dem Magneten 3 im Polgehäuse 1. Die Verbindung 4 zwischen dem Polgehäuse 1 und dem Rückschlusselement 2 ist in vergrößertem Maßstab in Figur 5 gezeigt. Wie aus Figur 5 ersichtlich ist, ist die Verbindung 4 zwischen dem Polgehäuse 1 und dem Rückschlusselement 2 durch einen ersten Verbindungsbereich 7 und einen zweiten Verbindungsbereich 8 gebildet. Der erste Verbindungsbereich 7 bildet eine Presspassung zwischen dem Polgehäuse 1 und dem Rückschlusselement 2. Der zweite Verbindungsbereich 8 bildet eine Spielpassung zwischen dem Rückschlusselement 2 und dem Polgehäuse 1. Die Zähne 5 des Polgehäuses 1 weisen dabei einen Zahnkopf 5a, eine erste Zahnflanke 5b, eine zweite Zahnflanke 5c und einen Zahnzwischenraum 5d auf. Die Zähne 6 des Rückschlusselements 2 weisen einen Zahnkopf 6a, eine erste Zahnflanke 6b, eine zweite Zahnflanke 6c und einen Zahnzwischenraum 6d auf. Wie aus Figur 5 ersichtlich ist, ist hierbei die Presspassung zwischen dem Polgehäuse 1 und dem Rückschlusselement 2 jeweils an den Zahnflanken 5b, 6b und 5c, 6c gebildet. Somit bildet diese Presspassung zwischen den Zahnflanken der Zähne 5 und 6 den ersten Verbindungsbereich der Verbindung 4 zwischen Polgehäuse 1 und Rückschlusselement 2. Wie weiter aus Figur 5 ersichtlich ist, ist im Bereich zwischen den Zahnköpfen 5a der Zähne 5 und den Zahnzwischenräumen 6d der Zähne 6 ein Spalt 10 gebildet. Wie in Figur 5 gezeigt, weist der Spalt 10 eine Breite f auf. Zwischen dem Zahnkopf 6a und dem Zahnzwischenraum 5d ist ferner ein Spalt 11 gebildet, welcher wie in Figur 5 gezeigt eine Breite k aufweist. Die einander gegenüberliegenden Zahnköpfe und Zahnzwischenräume der Zähne 5 und 6 bilden dabei den zweiten Verbindungsbereich mit Spielpassung zwischen dem Polgehäuse und dem Rückschlusselement 2. Die Zahnflanken 5b, 5c und 6b, 6c weisen dabei einen Winkel α auf, welcher ca. 70° beträgt. Dieser Winkel ist relativ steil, so dass der Magnet 3 von den während des Fügens auftretenden Fügekräften an dem ersten Verbindungsbereich 7 im Wesentlichen unbeeinflusst bleibt. Somit kann über die Verbindung an den Zahnflanken zwischen den Zähnen 5 und 6 eine ausreichende Flussleitung zwischen Polgehäuse 1 und Rückschlusselement 2 sichergestellt werden. Die Montage kann dabei einfach erfolgen und Fertigungstoleranzen des Polgehäuses und des Rückschlusselements, insbesondere im Bereich der Durchmesser dieser Bauteile, haben keinen negativen Einfluss auf die Montage. Da der Magnet 3 vor dem Fügen des Rückschlusselements 2 in das Polgehäuse 1 am Rückschlusselement 2 befestigt wurde, wird dieses gemeinsam mit dem Rückschlusselement im Polgehäuse 1 montiert.

Es sei angemerkt, dass für eine Verbindung zwischen Polgehäuse 1 und Rückschlusselement 2 eine Presspassung an zwei Zahnflanken der Zähne 5, 6 ausreichend ist. Ferner sei angemerkt, dass eine Umfangslänge der Zähne 6 des Rückschlusselements 2 ca. doppelt so lang wie eine Umfangslänge der Zähne 5 des Polgehäuses 1 ist (vgl. Figur 5).

Erfindungsgemäß kann somit verhindert werden, dass während des Fügens des Polgehäuses 1 und des Rückstoßelements 2 Kräfte in Radialrichtung nach innen auf den Magneten 3 wirken können. Die Zahnflanken der Zähne 5 und 6 sind dabei in einem möglichst steilen Winkel α gebildet, um die Radialkräfte während des Fügevorgangs möglichst gering zu halten. Durch die einander komplementäre Verzahnung zwischen Polgehäuse und Rückschlusselement kann ferner eine sichere Montage ermöglicht werden, bei der praktisch keine Fehlmontagen auftreten können.

Figur 6 zeigt ein Rückschlusselement 2 gemäß einem zweiten Ausführungsbeispiel der Erfindung. Das Rückschlusselement 2 des zweiten Ausführungsbeispiels entspricht im Wesentlichen dem ersten Ausführungsbeispiel, wobei im Unterschied zum ersten Ausführungsbeispiel zusätzlich noch mehrere Schlitze 12 gebildet sind. Wie aus Figur 6 ersichtlich ist, sind die Schlitze 12 nicht über die gesamte Länge des Rückschlusselements 2 gebildet. Die Schlitze 12 stellen sicher, dass insbesondere Kräfte und Spannungen in Umfangsrichtung teilweise vom Rückschlusselement 2 aufgenommen werden können und so nicht zu einer Beschädigung des Magneten 3 während der Montage führen können. Ansonsten entspricht dieses Ausführungsbeispiel dem ersten Ausführungsbeispiel, so dass auf die dort gegebene Beschreibung verwiesen werden kann.

Figur 7 zeigt ein Rückschlusselement 2 gemäß einem dritten Ausführungsbeispiel der Erfindung. Das dritte Ausführungsbeispiel entspricht im Wesentlichen dem ersten Ausführungsbeispiel, wobei im Unterschied zum ersten Ausführungsbeispiel beim dritten Ausführungsbeispiel die durch die Zähne 6 gebildete Verzahnung nicht vollständig entlang des gesamten Umfangs des Rückschlusselements 2 gebildet ist. Im dritten Ausführungsbeispiel sind vier Bereiche 13 mit jeweils drei Zähnen 6 vorgesehen. Die Bereiche 13 sind dabei gleichmäßig entlang des Außenumfangs des Rückschlusselements 2 verteilt. Zwischen den Bereichen 13 sind ebene Umfangsflächen 14 am Außenumfang des Rückschlusselements 2 gebildet. Ansonsten entspricht dieses Ausführungsbeispiel dem ersten Ausführungsbeispiel, so dass auf die dort gegebene Beschreibung verwiesen werden kann.

Es sei angemerkt, dass die Erfindung nicht auf die beschriebenen Ausführungsbeispiele beschränkt ist. Vielmehr können die beschriebenen Ausführungsbeispiele, bei denen jeweils Modifikationen des Rückschlusselements 2 beschrieben wurden, auch derart modifiziert werden, dass die am Rückschlusselement 2 beispielhaft beschriebene Modifizierung auch am Polgehäuse vorgenommen werden kann.

## Patentansprüche

1. Elektrische Maschine, umfassend ein Polgehäuse (1), einen Magneten (3) und ein Rückschlusselement (2), wobei zwischen dem Polgehäuse (1) und dem Rückschlusselement (2) eine Verbindung (4) mit einem ersten Verbindungsbereich (7) und einem zweiten Verbindungsbereich (8) ausgebildet ist, wobei der zweite Verbindungsbereich (8) eine Spielpassung und der erste Verbindungsbereich (7) eine Presspassung umfasst, und die Verbindung (4) eine Verzahnung umfasst, wobei am inneren Umfang des Polgehäuses (1) eine Vielzahl von Zähnen (5) und am Außenumfang des Rückschlusselements (2) eine Vielzahl von Zähnen (6) gebildet ist und die Zähne (5) des Polgehaüses (1) und die Zähne (6) des Rückschlusselements (2) eine erste Zahnflanke (5b, 6b) und eine zweite Zahnflanke (5c, 6c), einen Zahnkopf (5a, 6a) und einen Zahnzwischenraum (5d, 6d) umfassen, wobei der die Presspassung aufweisende erste Verbindungsbereich (7) an der ersten und zweiten Zahnflanke (5b, 5c, 6b, 6c) ausgebildet ist, wobei im montierten Zustand zwischen dem Polgehäuse (1) und dem Rückschlusselement (2) am Zahnkopf (5a, 6a) und am Zahnzwischenraum (5d, 6d) jeweils ein Spalt (10, 11) gebildet ist, wobei im Bereich zwischen den Zahnköpfen (5a) der Zähne (5) des Polgehaüses (1) und den Zahnzwischenräumen (6d) der Zähne (6) des Rückschlusselements (2) ein Spalt (10) gebildet ist, der eine Breite f aufweist, und zwischen den Zahnköpf Zähne (5) des Polgehaüses (1) (6a) der Zähne (6) des Rückschlusselements (2) und den Zahnzwischenräumen (5d) der Zähne (5) des Polgehaüses (1) ferner ein Spalt (11) gebildet ist, welcher eine Breite k aufweist, wobei die einander gegenüberliegenden Zahnköpfe und Zahnzwischenräume der Zähne (5) des Polgehaüses (1) und der Zähne (6) des Rückschlusselements (2) dabei den zweiten Verbindungsbereich bilden, wobei der Presspassungsbereich derart gewählt ist, dass nur ein minimaler Einfluss der Fügekräfte während des Iügens des Polgehäuses (1) und des Rückschlusselements (2) auf den Magneten (3), vorhanden ist, wobei jedoch trotzdem eine genaue Positionierung und eine gute Fixierung der - beiden Bauteille ermöglicht werden, und die Zahnflanken der Zähne (5) des Polgehaüses (1) und der Zähne (6) des Rückschlusselements (2) in einem Winkel α gebildet sind wobei α zwischen 50° und 90° zur Tangentialrichtung beträgt, um die Radialkräfte während des Fügevorgangs möglichst gering zu halten, und an dem inneren Umfang des Rückschlusselements (2) der als Ringmagnet (3) ausgebildete Magnet (3) angeordnet ist.

2. Elektrische Maschine nach Anspruch 1, **dadurch gekennzeichnet, dass** die Verzahnung entlang des gesamten Umfangs zwischen dem Polgehäuse (1) und dem Rückschlusselement (2) gebildet ist.

3. Elektrische Maschine nach Anspruch 1, **dadurch gekennzeichnet, dass** die Verzahnung nur partiell entlang des Umfangs an Bereichen (13) zwischen dem Polgehäuse (1) und dem Rückschlusselement (2) gebildet ist.

4. Elektrische Maschine nach einem der vorhergehenden Ansprüche, **dadurch gekennzeichnet, dass** das Rückschlusselement (2) und/oder das Polgehäuse (1) einen Schlitz (12) umfasst, wobei der Schlitz (12) nur über eine gewisse axiale Länge ausgebildet ist.

5. Elektrische Maschine nach Anspruch 4, **dadurch gekennzeichnet, dass** der Schlitz (12) in axialer Richtung parallel zu einer Mittelachse des Rückschlusselements (2) gebildet ist.

6. Komforteinrichtung für ein Fahrzeug, umfassend eine elektrische Maschine, insbesondere einen Elektromotor, nach einem der vorhergehenden Ansprüche.

## Claims

1. Electrical machine, comprising a pole housing (1), a magnet (3) and a magnetic return element (2), wherein a connection (4) to a first connection region (7) and a second connection region (8) is formed between the pole housing (1) and the magnetic return element (2), wherein the second connection region (8) comprises a clearance fit and the first connection region (7) comprises a press fit and the connection (4) comprises a toothed arrangement, wherein a plurality of teeth (5) is formed on the inner circumference of the pole housing (1) and a plurality of teeth (6) is formed on the outer circumference of the magnetic return element (2) and the teeth (5) of the pole housing (1) and the teeth (6) of the magnetic return element (2) comprise a first tooth edge (5b, 6b) and a second tooth edge (5c, 6c), a tooth head (5a, 6a) and a tooth intermediate space (5d, 6d), wherein the first connection region (7), which has the press fit, is formed on the first and second tooth edges (5b, 5c, 6b, 6c) wherein, in the mounted state, a gap (10, 11) is formed between the pole housing (1) and the magnetic return element (2) on the tooth head (5a, 6a) and on the tooth intermediate space (5d, 6d), respectively, wherein in the region between the tooth heads (5a) of the teeth (5) of the pole housing (1) and the tooth intermediate spaces (6d) of the teeth (6) of the magnetic return element (2) a gap (10) is formed which has a width f, and in addition between the tooth heads (6a) of the teeth (5) of the magnetic return element (2) and the tooth intermediate spaces (5d) of the teeth (6) of the pole housing (1) a gap (11) is formed which has a width k, wherein the tooth heads and tooth intermediate spaces, lying opposite one another, of the teeth (5) of the pole housing (1) and the teeth (6) of the magnetic return element (2) form here the second connection region, wherein the form fit region is selected such that only a minimal influence of the joining forces during the joining of the pole housing (1) and of the magnetic return element (2) on the magnet (3) is present, wherein, nevertheless, precise positioning and good securement of the two components is made possible and the tooth edges of the teeth (5) of the pole housing (1) and of the teeth (6) of the magnetic return element (2) are formed at an angle α, wherein α is between 50° and 90° with respect to the tangential direction in order to keep the radial forces during the joining process as low as possible, and the magnet (3) which is embodied as a ring magnet (3) is arranged on an inner circumference of the magnetic return element (2).

2. Electrical machine according to Claim 1, **characterized in that** the toothed arrangement is formed along the entire circumference between the pole housing (1) and the magnetic return element (2).

3. Electrical machine according to Claim 1, **characterized in that** the toothed arrangement is formed only partially along the circumference at regions (13) between the pole housing (1) and the magnetic return element (2).

4. Electrical machine according to one of the preceding claims, **characterized in that** the magnetic return element (2) and/or the pole housing (1) comprise a slot (12), wherein the slot (12) is formed only over a certain axial length.

5. Electrical machine according to Claim 4, **characterized in that** the slot (12) is formed parallel to a central axis of the magnetic return element (2) in the axial direction.

6. Comfort device for a vehicle, comprising an electrical machine, in particular an electric motor, according to one of the preceding claims.

## Revendications

1. Machine électrique comprenant un boîtier polaire (1), un aimant (3) et un élément de fermeture (2), une liaison (4) avec une première zone de liaison (7) et une deuxième zone de liaison (8) étant formée entre le boîtier polaire (1) et l'élément de fermeture (2), la deuxième zone de liaison (8) comprenant un jeu et la première zone de liaison (7) comprenant une adaptation par poussée et la liaison (4) comprenant une dentelure, une pluralité de dents (5) étant formée sur la périphérie intérieure du boîtier polaire (1) et une pluralité de dents (6) étant formée sur la périphérie extérieure de l'élément de fermeture (2) et les dents (5) du boîtier polaire (1) et les dents (6) de l'élément de fermeture (2) comprenant un premier flanc (5b, 6b) de dent et un deuxième blanc (5c, 6c) de dent, une tête (5a, 6a) de dent et un espace (5d, 6d) inter-dentaire, la première zone de liaison (7) qui présente l'adaptation par poussée étant formée sur le premier et le deuxième flanc (5b, 5c, 6b, 6c) des dents lorsque la machine est montée, un interstice (10, 11) étant formé entre le boîtier polaire (1) et l'élément de fermeture (2) sur la tête (5a, 6a) de dent et dans l'espace (5d, 6d) inter-dentaire, un interstice (10) étant formé dans la zone entre les têtes (5a) de dent des dents (5) du boîtier polaire (1) et les espaces (6d) inter-dentaires des dents (6) de l'élément de fermeture (2), lequel interstice présente une largeur f, et un interstice (11) étant en outre formé entre les têtes (6) de dent des dents (6) de l'élément de fermeture (2) et les espaces (5d) inter-dentaires, lequel interstice présente une largeur k, les têtes de dent et les espaces inter-dentaires en regard les uns des autres des dents (5) du boîtier polaire (1) et des dents (6) de l'élément de fermeture (2) formant en l'occurrence la deuxième zone de liaison, la zone d'adaptation par poussée étant choisie de telle sorte qu'il existe seulement une influence minimale des forces d'assemblage pendant l'assemblage du boîtier polaire (1) et de l'élément de fermeture (2) sur l'aimant (3), un positionnement précis et une bonne fixation des deux composants étant néanmoins possibles, et les flancs de dent des dents (5) du boîtier polaire (1) et des dents (6) de l'élément de fermeture (2) étant formés suivant un angle α, α valant entre 50° et 90° par rapport à la direction tangentielle, afin de maintenir aussi faibles que possible les forces radiales pendant l'opération d'assemblage, et l'aimant réalisé sous forme d'aimant torique (3) étant disposé sur la périphérie intérieure de l'élément de fermeture (2).

2. Machine électrique selon la revendication 1, **caractérisée en ce que** la dentelure est formée sur toute la périphérie entre le boîtier polaire (1) et l'élément de fermeture (2).

3. Machine électrique selon la revendication 1, **caractérisée en ce que** la dentelure n'est formée que sur une partie de la périphérie, en des zones (13) situées entre le boîtier polaire (1) et l'élément de fermeture (2).

4. Machine électrique selon l'une des revendications précédentes, **caractérisée en ce que** l'élément de fermeture (2) et/ou le boîtier polaire (1) comprennent une fente (12) et **en ce que** la fente (12) n'est formée que sur une certaine longueur axiale.

5. Machine électrique selon la revendication 4, **caractérisée en ce que** la fente (12) est formée dans la direction axiale parallèlement à l'axe central de l'élément de fermeture (2).

6. Dispositif de confort pour un véhicule, comprenant une machine électrique et en particulier un moteur électrique selon l'une des revendications précédentes.
